(19) Europäisches Patentamt
European Patent Office
Office européen des brevets

(11) **EP 2 901 538 B1**

(12) **EUROPÄISCHE PATENTSCHRIFT**

(45) Veröffentlichungstag und Bekanntmachung des Hinweises auf die Patenterteilung:
**31.01.2018 Patentblatt 2018/05**

(51) Int Cl.:
*H02J 3/38* *(2006.01)*    *H02J 3/46* *(2006.01)*

(21) Anmeldenummer: **12801476.8**

(22) Anmeldetag: **20.11.2012**

(86) Internationale Anmeldenummer:
**PCT/EP2012/073076**

(87) Internationale Veröffentlichungsnummer:
**WO 2014/079476 (30.05.2014 Gazette 2014/22)**

(54) **VERFAHREN UND SYSTEM ZUM BETREIBEN EINES ELEKTRISCHEN ENERGIEVERSORGUNGSNETZES**

METHOD AND SYSTEM FOR OPERATING AN ELECTRICAL ENERGY SUPPLY NETWORK

PROCÉDÉ ET SYSTÈME D'EXPLOITATION D'UN RÉSEAU D'ALIMENTATION EN ÉNERGIE ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**05.08.2015 Patentblatt 2015/32**

(73) Patentinhaber: **Siemens Aktiengesellschaft 80333 München (DE)**

(72) Erfinder: **OCHSENFELD, Henning 90461 Nürnberg (DE)**

(56) Entgegenhaltungen:
**EP-A2- 2 355 294**

• **TEUVO KOHONEN: "Self-Organizing Maps", 1. September 1996 (1996-09-01), SPRINGER SERIES IN INFORMATION SCIENCES, SPRINGER, BERLIN, DE, XP007910976, ISSN: 0720-678X Seite 105 - Seite 176**

**Beschreibung**

Die Erfindung betrifft ein Verfahren zum Betreiben eines elektrischen Energieversorgungsnetzes, das eine Mehrzahl von elektrischen Energieverbrauchern und/oder Energieerzeugern umfasst, die mit einer gemeinsamen Steuereinrichtung in Verbindung stehen. Die Erfindung betrifft auch ein System mit einer Steuereinrichtung zum Durchführen eines solchen Verfahrens.

Klassisch aufgebaute elektrische Energieversorgungsnetze sind prinzipiell dazu eingerichtet, elektrische Energie von vergleichsweise wenigen zentralen Energieerzeugern, z.B. Kohlekraftwerken, zu den Endverbrauchern zu liefern. Die Übertragungsrichtung solcher Energieverteilsysteme ist im Wesentlichen konstant; ferner wird die Energieerzeugung dem - prognostizierten und/oder tatsächlichen - Energiebedarf durch die Endverbraucher angepasst.

Jüngste Entwicklungen und politische Vorgaben haben hingegen zu einer Liberalisierung des elektrischen Energiemarktes geführt. Diese bewirkt, dass seit einigen Jahren verstärkt von dezentralen Energieerzeugern, wie z.B. Windenergieanlagen, kleinen Blockheizkraftwerken, Biogasanlagen und Photovoltaikanlagen, bereitgestellte elektrische Energie in die Energieversorgungsnetze auf Mittel- oder Niederspannungsebene eingespeist wird, was einen Umbruch der bisher üblichen Übertragungsrichtung zur Folge hat. Dezentrale Energieerzeuger, die elektrische Energie aus regenerativen Quellen wie Wind oder Sonnenlicht bereitstellen, zeichnen sich zudem durch starke Schwankungen hinsichtlich der von ihnen bereitgestellten elektrischen Leistung aus, beispielsweise kann eine Windkraftanlage bei starkem Wind eine vergleichsweise große elektrische Leistung ins Energieversorgungsnetz abgeben, während bei schwachem Wind oder sogar Windstille die abgegebene elektrische Leistung bis auf Null absinken kann.

Diesem Problem wurde bisher vorwiegend durch Vorhalten sogenannter Spitzenlastkraftwerke begegnet, die zu Zeiten geringer dezentraler Einspeisung oder einer besonders hohen Energieentnahme durch elektrische Endverbraucher in Betrieb genommen werden. Das Vorhalten und der Betrieb solcher nur vergleichsweise selten benötigter Spitzenlastkraftwerke sind jedoch mit hohen Kosten verbunden.

Eine weitere Möglichkeit zur Nivellierung der durch volatile Energieeinspeisungen ungleichmäßig durch das Energieversorgungsnetz bereitgestellten elektrischen Energie besteht im Betreiben von Energiespeichern, wobei insbesondere sogenannte Pumpspeicherwerke zum Einsatz kommen. Bei einem Überangebot elektrischer Energie im Energieversorgungsnetz werden die Speicherkapazitäten, z.B. durch den Betrieb eines Pumpspeicherwerkes während des Pumpens, aufgeladen, während bei einem Mangel elektrischer Energie im Energieversorgungsnetz die Kapazitäten des Energiespeichers entladen werden, z.B. durch den Betrieb des Pumpspeicherwerkes als Wasserkraftwerk. Solche Pumpspeicherwerke können jedoch aufgrund spezieller Umgebungsanforderungen (zwei benachbarte unterschiedliche Höhenniveaus) nicht überall vorgesehen werden; weitere Energiespeicher, z.B. Batterien sind noch vergleichsweise teuer.

Der verstärkte Einsatz von dezentralen Energiequellen zur Energieversorgung macht daher neue Steuerungskonzepte erforderlich, die die Verteilung elektrischer Energie sowohl auf Hoch- und Mittelspannungsebene als auch auf Niederspannungsebene bis hin zum Endverbraucher elektrischer Energie betreffen. Solche Steuerungskonzepte werden häufig unter dem Namen "Smart Grid" zusammengefasst. Ein Ziel solcher Smart Grid Konzepte ist es, eine effiziente Steuerung von Angebot und Nachfrage nach elektrischer Energie im Energieversorgungsnetz vorzunehmen, so dass beispielsweise weniger Spitzenlastkraftwerke bereitgestellt werden müssen. Hierbei gewinnt aufgrund der stärker werdenden Einbindung regenerativ erzeugter elektrischer Energie in die Energieversorgungsnetze und der damit einhergehenden schwankenden Einspeisesituation einerseits die erzeugungsorientierte Beeinflussung des Energieverbrauchs auf Seiten des Endverbrauchers, andererseits aber auch die Beeinflussung der Einspeisung durch dezentrale Energieerzeuger zunehmend an Bedeutung. Hierfür werden sogenannte "Energy Management Systeme" eingesetzt.

Beispielsweise bietet die Anmelderin unter dem Namen "DEMS" (Decentralized Energy Management System) eine Steuereinrichtung zum Betrieb eines Energieversorgungsnetzes an, mit dem Energieerzeuger und -verbraucher jeglicher Art hinsichtlich ihres jeweiligen Betriebs optimal aufeinander abgestimmt werden können. Hierzu werden die Energieerzeuger bzw. -verbraucher zur Netzbetriebsführung hinsichtlich energetischer, ökonomischer und ökologischer Gesichtspunkte optimal geregelt. Die über diese Steuereinrichtung angesteuerten Energieerzeuger bzw. Energieverbraucher werden unter Nutzung sogenannter "Fahrpläne" geregelt, die üblicherweise immer am Vortag des jeweiligen Betriebs festgelegt werden und die den Betrieb der Energieerzeuger bzw. -verbraucher in Abhängigkeit der Zeit angeben und nach den oben genannten Gesichtspunkten optimiert sind. Zur Bestimmung der Fahrpläne werden für die jeweiligen Energieerzeuger bzw. -verbraucher prognostizierte Energieerzeugungs- bzw. Energieverbrauchszeitreihen benötigt, die über einen vorgegebenen Zeitverlauf, z.B. für einen Tag, eine Woche, einen Monat oder ein Jahr, eine Prognose des Verlaufs der erzeugten bzw. verbrauchten elektrischen Energie angeben. Abweichungen von den prognostizierten Zeitverläufen können durch die Steuereinrichtung während des eigentlichen Betriebs in Echtzeit festgestellt und durch nachträgliche Steuerbefehle ausgeglichen werden.

Während eine solche optimierte Regelung durch eine Steuereinrichtung eines Energiemanagementsystems bei einer vergleichsweise kleinen Anzahl regelbarer dezentraler Energieerzeuger sowie Energieverbraucher noch gut möglich ist, ergeben sich jedoch bei der Einbindung einer vergleichsweise hohen Anzahl (z.B. mehrere Hundert) zu regelnder dezentraler Energieerzeuger bzw. Energieverbraucher in ein gemeinsames Regelungssystem Schwierigkeiten. Zum Einen ist es nämlich verwaltungstechnisch sehr aufwändig, die Verbrauchsdaten eines jeden Energieverbrauchers bzw. das Einspeiseverhalten eines jeden dezentralen Energieerzeugers separat zu bewerten und basierend darauf eine Regelung zu entwickeln. Hierzu müsste beispielsweise für die Verbraucherseite ein individuelles Modell des jeweiligen Energieverbrauchers in der Steuereinrichtung hinterlegt werden, was ein spezifisches Wissen über einzelne installierte elektrische Verbrauchsgeräte voraussetzen würde. Zum Anderen würde das stochastische Verbrauchsverhalten der jeweiligen Energieverbraucher die zur Optimierung der Regelung benötigten Verbrauchsprognosen aufgrund zu hoher Prognosevarianzen praktisch unbrauchbar machen. Außerdem bestehen bei heutigen Steuereinrichtungen rein praktisch numerische Grenzen bei der Optimierung: die zur Einbindung der Energieerzeuger bzw. Energieverbraucher in die Regelung erforderliche mathematische Abbildung einer Vielzahl von Energieverbrauchern bzw. Energieerzeugern als Optimierungsproblem würden die Rechenkapazitäten der Steuereinrichtungen übersteigen und eine rechnerische Lösungsfindung zeitlich unpraktikabel bzw. schlichtweg unmöglich machen. Das genannte Problem wird durch die Tatsache verschärft, dass entsprechend dem voranschreitenden dezentralen Netzausbau zu den bestehenden Energieerzeugern bzw. Energieverbrauchern kurz- bis mittelfristig weitere Energieerzeuger bzw. Energieverbraucher hinzukommen werden, die ebenfalls in die Regelung der Steuereinrichtung eingebunden werden müssen.

Aus der Druckschrift EP 2 355 294 ist es bekannt, neue Verbraucher oder Erzeuger von elektrischer Energie anhand von Benutzerangaben zu vorher bekannten Lastprofilen zuzuordnen.

Der Erfindung liegt daher die Aufgabe zugrunde, ein Verfahren bzw. ein System anzugeben, mit dem auch Energieversorgungsnetze mit einer Vielzahl von Energieerzeugern und/oder Energieverbrauchern vergleichsweise effizient betrieben werden können, wobei insbesondere neu hinzukommende Energieerzeuger bzw. Energieverbraucher in die zum Betrieb des Energieversorgungsnetzes bestehende Regelung eingebunden werden können.

Hinsichtlich des Verfahrens wird diese Aufgabe erfindungsgemäß durch ein Verfahren zum Betreiben eines elektrischen Energieversorgungsnetzes, das eine Mehrzahl von elektrischen Energieverbrauchern und/oder Energieerzeugern umfasst, die mit einer gemeinsamen Steuereinrichtung in Verbindung stehen, gelöst, bei dem zum Betreiben des Energieversorgungsnetzes mindestens zwei Energieprofilgruppen bereitgestellt werden, denen die Energieverbraucher und/oder Energieerzeuger derart zugeordnet sind, dass jeweils Energieverbraucher mit gleichen oder ähnlichen Energieverbrauchszeitreihen und Energieerzeuger mit gleichen oder ähnlichen Energieerzeugungszeitreihen derselben Energieprofilgruppe zugeordnet sind. Ein weiterer Energieverbraucher wird anhand zumindest einer für ihn charakteristischen Energieverbrauchszeitreihe zu einer der Energieprofilgruppen zugeordnet, während ein weiterer Energieerzeuger anhand zumindest einer für ihn charakteristischen Energieerzeugungszeitreihe zu einer der Energieprofilgruppen zugeordnet wird. Alle Energieerzeuger und/oder Energieverbraucher derselben Energieprofilgruppe werden anhand einer für die jeweilige Energieprofilgruppe charakteristischen Gruppen-Energieverbrauchs- bzw. Gruppen-Energieerzeugungszeitreihe durch die gemeinsame Steuereinrichtung betrieben.

Unter dem Begriff "Energieverbraucher" ist an dieser Stelle entweder ein einzelnes elektrisches Gerät, dessen verbrauchte elektrische Leistung separat gemessen wird, oder eine Gruppe von elektrischen Geräten zu verstehen, deren verbrauchte elektrische Leistung gemeinsam gemessen wird. In beiden Fällen kann vorgesehen sein, dass die Leistungsaufnahme des jeweiligen Energieverbrauchers durch die Steuereinrichtung regelbar ist, jedoch stellt die Regelbarkeit keine zwingende Voraussetzung dar. Als Energieverbraucher wird im Zusammenhang mit der Erfindung somit beispielsweise ein elektrische Energie abnehmender "Kleinkunde" (z.B. ein Ein- oder Mehrfamilienhaus, ein kleines Unternehmen, ein kleiner Bürobetrieb) oder ein einzelnes elektrische Energie verbrauchendes Gerät (bzw. eine Anlage) größerer Leistung (z.B. eine Klimaanlage für ein größeres Gebäude bzw. Unternehmen) verstanden.

Unter dem Begriff "Energieerzeuger" sind generell alle elektrische Energie erzeugenden Geräte und Anlagen sowie Gerätegruppen (z.B. Windparks) zu verstehen, die durch eine Steuereinrichtung eines Energiemanagementsystems separat regelbar sind. Insbesondere sollen hiermit sogenannte dezentrale Energieerzeuger mit im Vergleich zu Großkraftwerken kleinerer elektrischer Leistung gemeint sein, also z.B. Photovoltaikanlagen, Windkraftanlagen, Blockheizkraftwerke, Biogasanlagen.

Unter einer "Steuereinrichtung" ist eine Datenverarbeitungseinrichtung, beispielsweise ein Controller eines Energiemanagementsystems, zu verstehen, die einerseits zum Empfang und zur Verarbeitung von Statusinformationen über den jeweiligen Zustand der Energieverbraucher, der Energieerzeuger und des Energieversorgungsnetzes und andererseits zum Aussenden von Steuerbefehlen an die Energieerzeuger und/oder Energieverbraucher sowie andere ansteuerbare Komponenten des Energieversorgungsnetzes (z.B. Transformatorstufensteller, Schalter) eingerichtet ist. Eine Steuereinrichtung muss hierbei nicht zwangsläufig aus einem einzelnen Gerät bestehen, vielmehr können auch mehrere (auch örtlich verteilt angeordnete) Geräte als eine Steuereinrichtung zusammenwirken, solange sie zur Umsetzung eines gemeinsamen Regelkonzeptes für den Betrieb des Energieversorgungsnetzes eingerichtet sind.

Die erfindungsgemäße Lösung besteht folglich in der Zusammenfassung mehrerer Energieverbraucher bzw. Energieerzeuger zu Energieprofilgruppen, wobei als Kriterium für die Zusammenfassung einzelner Energieverbraucher bzw. Energieerzeuger die Ähnlichkeit ihrer jeweiligen Verbrauchs- bzw. Erzeugungszeitreihen verwendet wird. Damit bilden jeweils Energieerzeuger bzw. Energieverbraucher mit übereinstimmendem oder ähnlichem zeitlichen Verlauf des Energieverbrauchs bzw. der Energieerzeugung, also mit ähnlichen Zeitreihen bzw. "Energieprofilen", eine gemeinsame Energieprofilgruppe. Im Anschluss an die Gruppenaufteilung müssen anstelle der jeweils einzelnen Energieverbraucher bzw. Energieerzeuger von der Steuereinrichtung für die Regelung des Betriebs des Energieversorgungsnetzes nur noch quasi "virtuelle" Energieverbraucher bzw. Energieerzeuger, in denen entsprechend höhere elektrische Leistungen zusammengefasst sind, betrachtet werden. Jeder Energieprofilgruppe ist hierbei eine charakteristische Gruppen-Energieerzeugungszeitreihe bzw. charakteristische Gruppen-Energieverbrauchszeitreihe zugeordnet, die zur Erstellung der oben erwähnten Fahrpläne für die Regelung verwendet werden. Hierdurch reduziert sich einerseits die Zahl der in die Regelung einzubeziehenden Energieverbraucher bzw. Energieerzeuger deutlich, was mit einer Verringerung der für die Optimierung und Regelung benötigten Rechenleistung der Steuereinrichtung einhergeht. Außerdem zeigt eine Gruppe von Energieverbrauchern bzw. Energieerzeugern mit ähnlichen Zeitreihen eine deutlich geringere Prognosevarianz als ein einzelner Energieverbraucher bzw. Energieerzeuger, so dass Prognosen einfacher und mit größerer Zuverlässigkeit erstellt werden können.

Eine vorteilhafte Ausführungsform des erfindungsgemäßen Verfahrens sieht vor, dass zum Bereitstellen der Energieprofilgruppen bekannte Energieverbrauchszeitreihen von den Energieverbrauchern des Energieversorgungsnetzes und/oder bekannte Energieerzeugungszeitreihen von den Energieerzeugern des Energieversorgungsnetzes hinsichtlich bestehender Ähnlichkeiten untersucht werden und einander ähnliche Energieverbrauchszeitreihen bzw. einander ähnliche Energieerzeugungszeitreihen in einer gemeinsamen Energieprofilgruppe zusammengefasst werden.

Bei dieser Ausführungsform werden somit die bereits im Energieversorgungsnetz bestehenden Energieverbraucher bzw. Energieerzeuger auf Ähnlichkeiten hinsichtlich ihrer Energieverbrauchs- bzw. -erzeugungszeitreihen hin untersucht und es wird anhand der bestehenden Ähnlichkeiten auf geeignete Energieprofilgruppen geschlossen. Auf diese Weise müssen nicht - möglicherweise ohne konkreten Bezug zu den vorhandenen Energieverbrauchern bzw. Energieerzeugern - zu verwendende Energieprofilgruppen im Vorhinein festgelegt und vorgegeben werden, vielmehr werden diese spezifisch anhand der vorhandenen Gegebenheiten entwickelt.

In diesem Zusammenhang kann gemäß einer weiteren vorteilhaften Ausführungsform des erfindungsgemäßen Verfahrens vorgesehen sein, dass die Energieverbrauchszeitreihen und/oder die Energieerzeugungszeitreihen als mehrdimensionale Vektoren bereitgestellt werden, die über ein vorgegebenes Betrachtungszeitfenster für mehrere Messzeitpunkte eine gemessene bezogene bzw. abgegebene Leistung darstellen, zur Untersuchung der Energieverbrauchszeitreihen bzw. Energieerzeugungszeitreihen auf bestehende Ähnlichkeiten eine Abbildung der mehrdimensionalen Vektoren in einen dimensionsreduzierten Merkmalsraum stattfindet und innerhalb des dimensionsreduzierten Merkmalsraums die Energieprofilgruppen bestimmt werden.

Hierdurch lassen sich die Zuordnungen der Zeitreihen der Energieerzeuger bzw. Energieverbraucher in einzelne Energieprofilgruppen einfacher durchführen, da diese nur in einem dimensionsreduzierten Merkmalsraum, also einem mathematischen Raum mit gegenüber der Dimensionalität des mehrdimensionalen Vektors reduzierter Anzahl von Dimensionen (Merkmalen), stattfinden muss. Wenn beispielsweise als Betrachtungszeitfenster ein Tag vorgegeben wird und jede Viertelstunde ein die Energieerzeugung oder den Energieverbrauch angebender Messwert aufgenommen wird, ergibt sich ein Vektor mit 96 Dimensionen (1440 min / 15 min = 96 Messwerte). Da eine Ähnlichkeitsanalyse für alle 96 Dimensionen nur bedingt verwertbare liefern würde, sollte die Dimensionsanzahl zunächst reduziert werden (z.B. durch Abbildung auf einen zweidimensionalen Raum), so dass danach im dimensionsreduzierten Merkmalsraum eine Ähnlichkeitsanalyse durchgeführt werden kann.

Konkret kann gemäß einer weiteren vorteilhaften Ausführungsform beispielsweise vorgesehen sein, dass die Abbildung der mehrdimensionalen Vektoren in den dimensionsreduzierten Merkmalsraum mittels der Methode der selbstorganisierenden Karten durchgeführt wird.

Bei der Methode der selbstorganisierenden Karten (SOM - "Self Organizing Maps") findet ähnlich wie bei der Abbildung von Sinnesreizen auf eine Region im menschlichen Gehirn eine Reduzierung der Merkmale statt, so dass ähnliche Eingangssignale benachbarte Bereiche eines dimensionsreduzierten Merkmalsraumes (im konkreten Fall benachbarte Bereiche der speziell angepassten zweidimensionalen Karte) anregen. Zunächst findet eine Trainingsphase zum "Anlernen" der selbstorganisierenden Karte statt. Beispielhaft ist eine solche Trainingsphase für selbstorganisierende Karten in "Teuvo Kohonen: Self-Organizing Maps, Springer-Verlag, 1997, 2. Auflage" beschrieben. Da vor einer solchen Trainingsphase nicht bekannt ist, in welchen Merkmalen bzw. Dimensionen sich die zu betrachtenden Zeitreihen unterscheiden, wird hierbei sozusagen "blind" nach einem vorkommenden Muster im Merkmalsraum gesucht, d.h., es wird anhand der numerischen Struktur der Zeitverläufe nach Ähnlichkeiten gesucht. Hierfür werden die euklidischen Distanzen zwischen den Gewichtsvektoren, den sog. Map-Units, in einer Unified Distance Matrix dargestellt, welche die Distanzwerte der benachbarten Gewichtsvektoren unterschiedlich, z.B. farblich, visualisiert. In der Unified Distanz Matrix können somit vorteilhaft Ähnlichkeiten zwischen den einzelnen Energieerzeugern bzw. Energieverbrauchern hinsichtlich ihrer jeweiligen Zeitreihen ermittelt werden. Dabei kann insbesondere beobachtet werden, ob sich verschiedenartige Gebiete auf der karte ausprägen. Ein Gebiet (Cluster) bedeutet, dass es dort viele ähnliche Eingangsvektoren gegeben haben muss, die die Gewichtsvektoren dorthin "gezogen" haben.

Um in diesem Zusammenhang besonders einfach die jeweiligen Energieprofilgruppen bestimmen zu können, ohne diese im Vorhinein kennen und festlegen zu müssen, wird gemäß einer weiteren vorteilhaften Ausführungsform des erfindungsgemäßen Verfahrens vorgeschlagen, dass zur Bestimmung der Energieprofilgruppen in dem dimensionsreduzierten Merkmalsraum die "k-means-Methode" oder eine erweiterte "k-means-Methode" durchgeführt wird.

Mittels dieser an sich bekannten Methoden zur Gruppen- bzw. Clusterbestimmung kann mit beliebigen Startpunkten in einer selbstorganisierenden Karte eine Zugehörigkeit von einzelnen Objekten der jeweiligen Karte (im vorliegenden Fall also der Abbildung der jeweiligen Zeitreihe auf die selbstorganisierende Karte) zu einzelnen Clustern, im vorliegenden Fall zu den jeweiligen Energieprofilgruppen, festgelegt werden. Hierbei wird jeweils ein Abstand zwischen dem einzelnen Objekt und einem Clustermittelpunkt ausgewertet. Danach werden die einzelnen Objekte dem Cluster zugeordnet, zu dem sie den geringsten Abstand aufweisen. Nach dieser Zuordnung wird anhand der zugeordneten Objekte ein neuer Clustermittelpunkt bestimmt und das Zuordnungsverfahren erneut begonnen. Nach einigen Iterationen ergeben sich stabile Cluster, die als Energieprofilgruppen verwendet werden können. Erweiterte k-means-Methoden optimieren beispielsweise den Anfangswert für die Startpunkte oder die Iterationsgeschwindigkeit, mit der das Verfahren durchgeführt wird.

Eine weitere vorteilhafte Ausführungsform des erfindungsgemäßen Verfahrens sieht vor, dass die Energieverbrauchszeitreihen und/oder Energieerzeugungszeitreihen vor der Untersuchung auf bestehende Ähnlichkeiten mittels einer Normierung vorverarbeitet werden.

Dies hat zur Folge, dass jeder Datenpunkt einer Zeitreihe ausschließlich auf seinen "Musterinformationsgehalt" reduziert wird, so dass der eigentliche zeitliche Verlauf nicht durch unabhängige Anteile, z.B. Offsets, gestört wird. Hiermit werden die Zeitreihen der einzelnen Energieerzeuger bzw. Energieverbraucher untereinander vergleichbar.

Weitere mögliche Vorverarbeitungsschritte umfassen eine Sortierung der Zeitreihen, z.B. nach Jahreszeit und Werktag bzw.

Nicht-Werktag, um grobe zeitliche Einflüsse weitestgehend auszuschalten. Optional können weiterhin sogenannte "Ausreißer" (d.h. anormale Muster bzw. Verlaufsabschnitte, die nur selten vorkommen) entdeckt und bei Bedarf verworfen werden. Dieser Schritt würde bei der späteren Gruppenanalyse bzw. Clusterfestlegung und beim Training des Klassifikationsalgorithmus durch Ausreißer bedingte Verzerrungseffekte mindern und dessen Leistungsfähigkeit erhöhen. Zum Abschluss der Datenvorverarbeitung können auch die durch Aufzeichnungsfehler bei der Erfassung der Zeitreihen bedingten lückenhaften Datenpunkte verworfen werden.

Gemäß einer weiteren vorteilhaften Ausführungsform des erfindungsgemäßen Verfahrens ist außerdem vorgesehen, dass zum Zuordnen des weiteren Energieverbrauchers bzw. des weiteren Energieerzeugers zu einer der Energieprofilgruppen die Energieverbrauchszeitreihe des weiteren Energieverbrauchers bzw. die Energieerzeugungszeitreihe des weiteren Energieerzeugers mit der für die jeweilige Energieprofilgruppe charakteristischen Modell-Energieverbrauchszeitreihe bzw. Modell-Energieerzeugungszeitreihe verglichen wird und der weitere Energieverbraucher bzw. weitere Energieerzeuger derjenigen Energieprofilgruppe zugeordnet wird, bei der der Vergleich die größte Ähnlichkeit ergibt.

Der für diese Zuordnung durchgeführte Vergleich kann beispielsweise mit Hilfe einer durch die oben genannte Methode der selbstorganisierenden Karten angelernte Karte erfolgen. Eine Zeitreihe eines neu hinzukommenden Energieerzeugers bzw. Energieverbrauchers regt bei einer solchen angelernten Karte diejenigen Bereiche an, die auch von Energieerzeugern bzw. Energieverbrauchern mit ähnlichen Zeitreihen angeregt werden, so dass "ähnliche" Energieerzeuger bzw. Energieverbraucher denselben Energieprofilgruppen zugeordnet werden.

Konkret kann der Vergleich in diesem Zusammenhang beispielsweise anhand der "Nächste-Nachbarn-Methode" oder der "Lernende-Vektorquantisierungs-Methode" durchgeführt werden.

Eine weitere vorteilhafte Ausführungsform des erfindungsgemäßen Verfahrens sieht zudem vor, dass die Bereitstellung der Energieprofilgruppen und/oder die Zuordnung von Energieverbrauchern und/oder Energieerzeugern zu Energieprofilgruppen in regelmäßigen Abständen oder ereignisgesteuert wiederholt durchgeführt wird.

Hierdurch können die Zuordnungen und die Gruppenfestlegung regelmäßig überprüft und an ggf. aufgetretene Änderungen angepasst werden, so dass das Regelsystem jeweils optimal an die aktuelle Situation und Zusammensetzung der Energieverbraucher bzw. Energieerzeuger angepasst ist.

Die oben genannte Aufgabe wird auch durch ein System zum Betreiben eines elektrischen Energieversorgungsnetzes, das eine Mehrzahl von elektrischen Energieverbrauchern und/oder Energieerzeugern umfasst, gelöst, das eine Steuereinrichtung aufweist, die mit den Energieerzeugern und/oder Energieverbrauchern verbindbar ist. Erfindungsgemäß ist vorgesehen, dass die Steuereinrichtung zur Durchführung eines Verfahrens gemäß einem der Ansprüche 1 bis 9 eingerichtet ist.

Hinsichtlich der Beschreibungen und Vorteile wird auf die Ausführungen zu dem erfindungsgemäßen Verfahren verwiesen.

Die Erfindung soll im Folgenden anhand von Ausführungsbeispielen näher erläutert werden. Hierzu zeigen

Figur 1    eine schematische Ansicht eines Teils eines elektrischen Energieversorgungsnetzes mit einer Anzahl elektrischer Energieverbraucher und Energieerzeuger;

Figur 2    ein Diagramm mit vorverarbeiteten Energieverbrauchszeitreihen mehrerer Energieverbraucher;

Figur 3    eine schematische Ansicht einer mit Energieverbrauchszeitreihen bestehender Energieverbraucher trainierten selbstorganisierenden Karte;

Figur 4    die selbstorganisierende Karte aus Figur 3 mit eingetragenen Energieprofilgruppen;

Figur 5    ein Diagramm mit für die in Figur 4 dargestellten Energieprofilgruppen charakteristischen Gruppen-Energieverbrauchszeitreihen; und

Figur 6    drei Diagramme zur Darstellung der Ähnlichkeit zwischen den Energieverbrauchszeitreihen der einzelnen Energieverbraucher mit den für ihre jeweiligen Energieprofilgruppen charakteristischen Gruppen-Energieverbrauchszeitreihen.

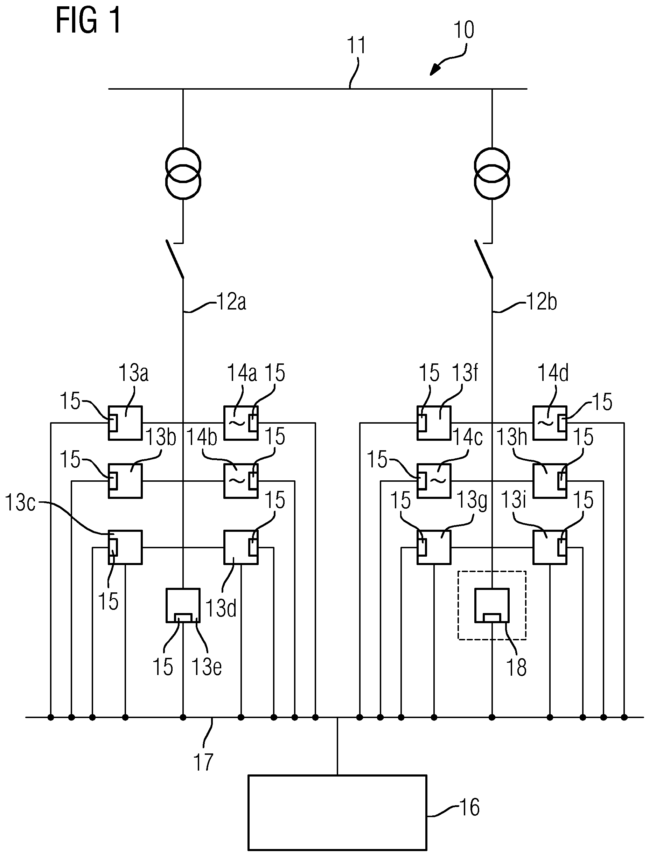

Figur 1 zeigt in schematischer Ansicht einen Teil 10 eines ansonsten nicht näher dargestellten Energieversorgungsnetzes. Von einer Sammelschiene gehen zwei Abzweigleitungen 12a und 12b ab, an die wiederum mehrere Energieverbraucher 13a-i und Energieerzeuger 14a-d angeschlossen sind. Die Energieverbraucher 13a-i und die Energieerzeuger 14a-d stehen in Figur 1 beispielhaft für eine beliebige Anzahl elektrischer Energieverbraucher und/oder Energieerzeuger, die beim optimalen Betrieb des Energieversorgungsnetzes berücksichtigt werden müssen. Die Energieverbraucher 13a-i bzw. Energieerzeuger 14a-d weisen Einrichtungen 15 auf, die zur Erfassung der von dem jeweiligen Energieverbraucher 13a-i aufgenommenen bzw. von dem jeweiligen Energieerzeuger 14a-d abgegebenen elektrischen Leistung eingerichtet sind. Darüber hinaus können die Einrichtungen 15 zur Regelung des jeweiligen Energieverbrauchers 13a-i bzw. Energieerzeugers 14a-d anhand von durch eine gemeinsame Steuereinrichtung 16 eines Energiemanagementsystems übermittelten Fahrplänen bzw. Steuerbefehlen eingerichtet sein. Die jeweiligen Einrichtungen sind zur Übermittlung der erfassten Leistungswerte und ggf. zum Empfang der Steuerbefehle über Kommunikationsverbindungen 17 mit der Steuereinrichtung 16 verbunden.

Da wie oben bereits erläutert die Einbindung jedes einzelnen Energieverbrauchers bzw. Energieerzeugers in das Regelungskonzept der Steuereinrichtung 16 ineffektiv bzw. aufgrund der Rechenleistung der Steuereinrichtung nicht machbar wäre, werden die einzelnen Energieverbraucher 13a-i bzw. Energieerzeuger 14a-d anhand der Ähnlichkeit ihrer Energieverbrauchs- bzw. Energieerzeugungszeitreihen Energieprofilgruppen zugeordnet, so dass von der Steuereinrichtung 16 anstelle einer Vielzahl von separaten Energieverbrauchern 13a-i und/oder Energieerzeugern 14a-d entsprechend den Energieprofilgruppen lediglich vergleichsweise wenige "virtuelle" Energieverbraucher bzw. Energieerzeuger beim Betrieb des Energieversorgungsnetzes berücksichtig werden müssen. Die Energieprofilgruppen werden von der Steuereinrichtung 16 datentechnisch bereitgestellt und verwaltet; eine Einbindung der von den Energieverbrauchern bzw. Energieerzeugern empfangenen Leistungswerte oder ggf. an diese zu versendenden Steuerbefehle erfolgt seitens der Steuereinrichtung 16 anhand der hinterlegten Energieprofilgruppen. Alternativ wäre es auch möglich, jeder Gruppe eine "Gruppensteuereinrichtung" zuzuordnen, die die Energieprofilgruppen datentechnisch bereitstellt und verwaltet und in entsprechender Weise mit der Steuereinrichtung 16 zusammenwirkt.

Figur 1 zeigt außerdem einen zu den bestehenden Energieverbrauchern 13a-i neu hinzukommenden weiteren Energieverbraucher 18, der durch Zuordnung zu einer der Energieprofilgruppen an die Steuereinrichtung 16 anzubinden ist.

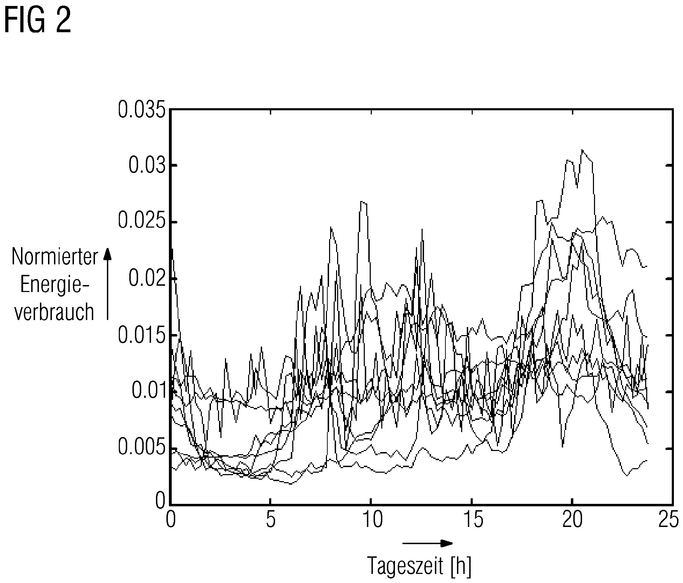

Die Vorgehensweise zur Bildung der Energieprofilgruppen und zur Zuordnung des weiteren Energieverbrauchers 18 zu einer der Energieprofilgruppen wird nachfolgenden anhand der Figuren 2 bis 6 erläutert. Die Erläuterungen werden nur beispielhaft anhand eines weiteren Energieverbrauchers 18 gegeben; die Gruppenbildung für die Energieerzeuger und die Zuordnung eines weiteren Energieerzeugers zu einer geeigneten Energieprofilgruppe erfolgen in entsprechender Weise.

Um die einzelnen Energieverbraucher, dies können je nach Energieversorgungsnetz mehrere Hundert bis mehrere Tausend sein, in das Regelsystem der Steuereinrichtung einbinden zu können, werden die einzelnen Energieverbraucher - wie bereits erwähnt - zu Energieprofilgruppen zusammengefasst. Beispielsweise werden hierfür die Energieverbrauchszeitreihen von hundert Energieverbrauchern in einer Energieprofilgruppe zusammengefasst. In die eigentlichen Netzbetriebs- und Optimierungsalgorithmen gehen nachher die auf diese Weise verdichteten Energieverbrauchszeitreihen der zusammengefassten Energieverbraucher ein.

Die Frage stellt sich hierbei nun einerseits nach den zu verwendenden Energieprofilgruppen und andererseits nach den Kriterien, die die Zuordnung eines Energieverbrauchers in eine bestimmte Energieprofilgruppe erlauben. Da davon ausgegangen wird, dass keine Kenntnis über die Umgebung des einzelnen Energieverbrauchers zur Verfügung steht, entfällt damit praktisch die manuelle Eingruppierung nach bestimmten Kriterien, wie z.B. nach in einem Haushalt vorhandenen Elektrogerätetypen. Daher muss ein Weg zu einer automatisierten Klassifikation und Zuweisung der einzelnen Energieverbraucher anhand von aufgezeichneten Verbrauchsdaten und daraus extrahierten Merkmalen und Datenstrukturen erfolgen. Die Methodik, mehrere Energieverbraucher anhand bestimmter Merkmalsmuster zu identifizieren und automatisiert in Energieprofilgruppen einzuteilen gliedert sich hierbei in mehrere Prozesse. Ziel ist es hierbei, automatisch entscheidungsrelevante, aber bisher unbekannte Zusammenhänge und Verknüpfungen in den Strukturen der Vielzahl von einzelnen Energieverbrauchszeitreihen zu entdecken.

Um die Energieverbrauchszeitreihen mehrerer Energieverbraucher einfacher miteinander vergleichen zu können, werden diese in einem ersten Schritt vorverarbeitet, d.h., die individuellen Energieverbrauchszeitreihen aller Energieverbraucher (z.B. aus Meterdatenbanken der Stromversorger entnommen) werden zunächst in gemeinsamer Weise einer Normierung unterzogen.

Beispielhaft sei als Datenbasis ein (anonymisierter) Datenbestand aus einzelnen Energieverbrauchszeitreihen von N Energieverbrauchern mit einer zeitlichen Auflösung von 15 Minuten angenommen. Zunächst wird vorab definiert, dass die Einteilung von Energieverbrauchern in Energieprofilgruppen anhand eines auf ein Betrachtungszeitfenster der Länge eines Tages bezogenen Verbrauchsmusters durchgeführt werden soll. Andere Längen von Zeitfenstern, wie z.B. ein halber Tag, eine Woche, ein Monat etc., sind selbstverständlich ebenso möglich. Im vorliegenden Fall besteht eine Energieverbrauchszeitreihe aus 96 Verbrauchswerten pro Tag, wobei ein voller Tag von 0:00 Uhr bis 23:45 Uhr definiert sei. Zunächst werden folglich die - zeitlich unbegrenzten - Zeitreihen jedes Energieverbrauchers entsprechend des Betrachtungszeitfensters in Tagesmuster unterteilt, d.h. ein Datenpunkt bzw. eine Energieverbrauchszeitreihe ist durch den mehrdimensionalen (konkret: 96-dimensionalen) Eingangsvektor $x_{i,j} = [x_l, x_2, \ldots x_{96}]^T$ beschrieben, wobei i die Nummer des Energieverbrauchers und j die des betrachteten Tages angibt.

Die mehrdimensionalen Eingangsvektoren mehrerer Energieverbraucher werden nun über alle Energieverbraucher in einer großen Datenmatrix X der Größe (Nxd)x96 angeordnet, wobei d die Anzahl der vorhandenen Tagesmuster pro Energieverbraucher darstellt.

In einem nächsten Schritt werden die Daten zunächst normiert, so dass anschließend für jede Zeile, also jede Energietagesverbrauchszeitreihe, in der Matrix X gilt:

$$\sum_{n=1}^{96} X_{i,n} = 1$$

Dies hat zur Folge, dass jede Energieverbrauchszeitreihe ausschließlich auf ihren "Musterinformationsgehalt" reduziert und das Muster nicht durch musterunabhängige Offsets gestört wird. Des Weiteren können die Daten vorab nach Jahreszeit und Werktag/Nicht-Werktag sortiert werden, um grobe zeitliche Einflüsse weitestgehend auszuschließen. Optional können weiterhin sogenannte Ausreißer (anormale Muster, die nur selten vorkommen) entdeckt und bei Bedarf verworfen werden. Dieser Schritt würde bei der späteren Clusteranalyse und beim Training des Klassifikationsalgorithmus durch Ausreißer bedingte Verzerrungseffekte mindern und dessen Leistungsfähigkeit erhöhen. Zum Abschluss der Datenvorverarbeitung können aufgrund von Aufzeichnungsfehlern lückenhafte Energieverbrauchszeitreihen verworfen werden. Figur 2 zeigt die nach den beschriebenen Schritten vorverarbeiteten, insbesondere normierten Energieverbrauchszeitreihen für Werktage von zehn Energieverbrauchern in einem beispielhaft angenommenen Zeitraum von 3 Monaten im Frühjahr, eine eindeutige Klassifikation - auch manueller Art - erscheint auch bei dieser verhältnismäßig geringen Anzahl von Zeitreihen (in der Praxis werden hierbei oft mehrere hundert Zeitreihen betrachtet) noch nicht ohne Weiteres möglich.

Ziel des nächsten Schrittes ist die Transformation der Daten in einen dimensionsreduzierten Merkmalsraum, um in diesem eine gezielte Datenanalyse betreiben zu können. Es wird dabei nach Energieprofilgruppen gesucht, die sich im Merkmalsraum strukturell unterscheiden, d.h. deren Ähnlichkeiten bzw. Unähnlichkeiten durch gewisse Distanzmaße nachgewiesen und die Energieprofilgruppen somit unterschieden werden können. Zur Transformation wird im vorliegenden Beispiel das an sich bekannte Verfahren der selbstorganisierenden Karten (SOM - "Self Organizing Maps") angewendet, welches zu den sogenannten unbeobachteten Lernverfahren gehört. Bei solchen Lernverfahren ist keine Zielausgabe vorgegeben und es kann somit auch keine Fehlerfunktion definiert werden. Trotzdem sind selbstorganisierende Karten in der Lage, selbstständig aus hochdimensionalen Merkmalsräumen klassenzusammengehörige Strukturen in einem Ausgaberaum niedrigerer Dimension zu entdecken und sich damit selbst zu organisieren. Diese Phase wird als Lern- bzw. Trainingsphase der selbstorganisierenden Karte bezeichnet.

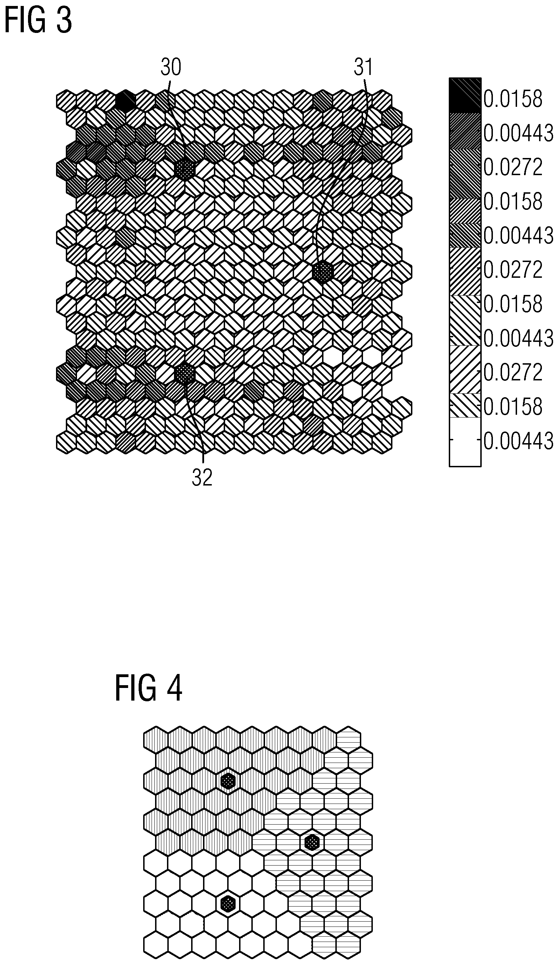

Nach dem Trainieren der Karte durch die Trainingsdaten, also durch die von den bereits vorhandenen Energieverbrauchern bereitgestellten mehrdimensionalen Energieverbrauchszeitreihen, erregen mehrdimensionale Eingangsvektoren, die an die Karte herangeführt werden, nur diejenigen Gebiete der Karte, die dem Eingangsvektor ähnlich sind. Damit können die Distanzen der einzelnen Kartenelemente untereinander in eine in geeigneter Weise, z.B. durch farbliche Abstufungen, unterteilte Karte überführt werden, die sog. Unified Distance Matrix (U-matrix), wie sie beispielhaft in Figur 3 mit unterschiedlichen Schraffuren gezeigt ist, wobei im konkreten Beispiel enge Schraffuren hohe Distanzen (Unähnlichkeit) und weite Schraffuren nah beieinander liegende (Ähnlichkeit) Kartenelemente repräsentieren. Diese Darstellung erlaubt nun die Analyse bzw. das Erkennen von Gruppen oder Clustern.

Unter Verwendung des an sich bekannten k-means Algorithmus wird nun die optimale Anzahl an Energieprofilgruppen in der resultierenden Karte (Figur 3) gesucht, wobei die Gruppenanzahl k entweder vorgegeben sein kann oder aus einer Optimierung hervorgehen kann, wobei als Optimalitätskriterium zur Auswahl von k beispielsweise der Davies-Bouldin Index verwendet wird. Für die vorliegenden Daten können k=3 Energieprofilgruppen gefunden werden; in Figur 3 sind entsprechend drei Gruppenzentren 30, 31, 32 eingetragen. Die umliegenden Kartenelemente bzw. deren Gewichtsvektoren werden gemäß der mittels der k-means Methode gefunden Distanzen jeweils einem Gruppenzentrum und damit einer der Energieprofilgruppen zugeteilt. Die sich ergebende Zuordnung ist in Figur 4 beispielhaft dargestellt.

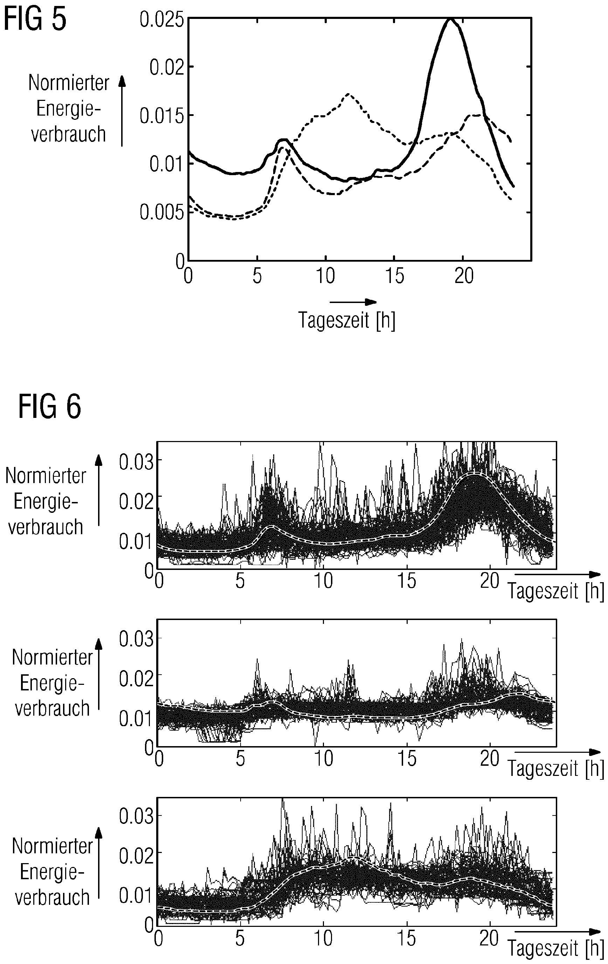

Jeder der Energieprofilgruppen kann anhand der Lage des jeweiligen Gruppenzentrums auf der Karte eine charakteristische Gruppen-Energieverbrauchszeitreihe zugeordnet werden. Figur 5 zeigt die resultierenden Gewichtsvektoren bzw. Gruppenenergieverbrauchszeitreihen der den Gruppenzentren entsprechenden Kartenelemente, d.h. die drei repräsentativen Verbrauchsmuster als Funktion der Tageszeit.

Mit den identifizierten Informationen über die einzelnen Energieprofilgruppen sowie deren Gruppen-Energieverbrauchszeitreihen kann nun im letzten Schritt ein generischer Klassifikationsalgorithmus entwickelt werden, welcher neue, der Karte bisher unbekannte Energieverbraucher anhand ihrer jeweiligen (in entsprechender Weise vorverarbeiteten) Energieverbrauchszeitreihen $x_{i,j}$ einer der gefundenen Energieprofilgruppen automatisch zuweist. Hierfür können beispielsweise Klassifikationsmodelle wie die "Nächste-Nachbarn-Methode" ("k-nearest-neighbor") oder die "Lernende-Vektorquantisierungs-Methode" ("Learning-vector-quantization") verwendet werden. Das Klassifizierungsergebnis unbekannter (vorverarbeiteter) Testdaten mittels der Nächste-Nachbarn-Methode basierend auf der bereits trainierten Karte ist beispielhaft in Figur 6 dargestellt. Hier sind die dabei den Energieprofilgruppen zugewiesenen Energieverbrauchszeitreihen sowie deren als durchgezogene Linie ausgeführter Mittelwert dargestellt. Die Ähnlichkeit der Mittelwerte zu den für die Gruppenzentren der Energieprofilgruppen gehörenden Gruppen-Energieverbrauchszeitreihen ist offensichtlich.

Es sei angemerkt, dass die Gruppenbildungs- und Klassifikationsroutinen beliebig oft, d.h. regelmäßig oder ereignisgesteuert, z.B. prinzipiell bei jedem neuen Datenpunkt, berechnet und adaptiert werden können. Außerdem könnten verschiedene Routinen, z.B. für den Tages- oder Jahreszeittyp, berechnet werden oder - um nur eine Routine zu betreiben - die Zeitinformation mittels binärer Indikatorfunktion mit in den Datenraum übernommen werden.

## Patentansprüche

1. Verfahren zum Betreiben eines elektrischen Energieversorgungsnetzes, das eine Mehrzahl von elektrischen Energieverbrauchern (13a-i) und/oder Energieerzeugern (14a-d) umfasst, die mit einer gemeinsamen Steuereinrichtung (16) in Verbindung stehen,
**dadurch gekennzeichnet, dass** zum Betreiben des Energieversorgungsnetzes folgende Schritte durchgeführt werden:

   - Bereitstellen von mindestens zwei Energieprofilgruppen, denen die Energieverbraucher (13a-i) und/oder Energieerzeuger (14a-d) derart zugeordnet sind, dass jeweils Energieverbraucher (13a-i) mit gleichen oder ähnlichen Energieverbrauchszeitreihen und Energieerzeuger (14a-d) mit gleichen oder ähnlichen Energieerzeugungszeitreihen derselben Energieprofilgruppe zugeordnet sind, wobei die Energieverbrauchszeitreihen und die Energieerzeugungszeitreihen einen zeitlichen Verlauf des Energieverbrauchs bzw. der Energieerzeugung wiedergeben;
   - Zuordnen eines weiteren Energieverbrauchers (18) anhand zumindest einer für ihn charakteristischen Energieverbrauchszeitreihe und/oder eines weiteren Energieerzeugers anhand zumindest einer für ihn charakteristischen Energieerzeugungszeitreihe zu einer der Energieprofilgruppen; und
   - Betreiben aller Energieerzeuger (14a-d) und/oder Energieverbraucher (13a-i, 18) derselben Energieprofilgruppe anhand einer für die jeweilige Energieprofilgruppe charakteristischen Gruppen-Energieverbrauchs- bzw. Gruppen-Energieerzeugungszeitreihe durch die gemeinsame Steuereinrichtung (16).

2. Verfahren nach Anspruch 1,
**dadurch gekennzeichnet, dass**

   - zum Bereitstellen der Energieprofilgruppen bekannte Energieverbrauchszeitreihen von den Energieverbrauchern (13a-i) des Energieversorgungsnetzes und/oder bekannte Energieerzeugungszeitreihen von den Energieerzeugern (14a-d) des Energieversorgungsnetzes hinsichtlich bestehender Ähnlichkeiten untersucht werden; und

- einander ähnliche Energieverbrauchszeitreihen bzw. einander ähnliche Energieerzeugungszeitreihen in einer gemeinsamen Energieprofilgruppe zusammengefasst werden.

3. Verfahren nach Anspruch 2,
**dadurch gekennzeichnet, dass**

- die Energieverbrauchszeitreihen und/oder die Energieerzeugungszeitreihen als mehrdimensionale Vektoren bereitgestellt werden, die über ein vorgegebenes Betrachtungszeitfenster für mehrere Messzeitpunkte eine gemessene bezogene bzw. abgegebene Leistung darstellen;
- zur Untersuchung der Energieverbrauchszeitreihen bzw. Energieerzeugungszeitreihen auf bestehende Ähnlichkeiten eine Abbildung der mehrdimensionalen Vektoren in einen dimensionsreduzierten Merkmalsraum stattfindet; und
- innerhalb des dimensionsreduzierten Merkmalsraums die Energieprofilgruppen bestimmt werden.

4. Verfahren nach Anspruch 3,
**dadurch gekennzeichnet, dass**

- die Abbildung der mehrdimensionalen Vektoren in den dimensionsreduzierten Merkmalsraum mittels der Methode der selbstorganisierenden Karten durchgeführt wird.

5. Verfahren nach Anspruch 4,
**dadurch gekennzeichnet, dass**

- zur Bestimmung der Energieprofilgruppen in dem dimensionsreduzierten Merkmalsraum die k-means-Methode oder eine erweiterte k-means-Methode durchgeführt wird.

6. Verfahren nach Anspruch 2 oder 3,
**dadurch gekennzeichnet, dass**

- die Energieverbrauchszeitreihen und/oder Energieerzeugungszeitreihen vor der Untersuchung auf bestehende Ähnlichkeiten mittels einer Normierung vorverarbeitet werden.

7. Verfahren nach einem der vorangehenden Ansprüche,
**dadurch gekennzeichnet, dass**

- zum Zuordnen des weiteren Energieverbrauchers (18) bzw. des weiteren Energieerzeugers zu einer der Energieprofilgruppen die Energieverbrauchszeitreihe des weiteren Energieverbrauchers (18) bzw. die Energieerzeugungszeitreihe des weiteren Energieerzeugers mit der für die jeweilige Energieprofilgruppe charakteristischen Modell-Energieverbrauchszeitreihe bzw. Modell-Energieerzeugungszeitreihe verglichen wird; und

- der weitere Energieverbraucher bzw. weitere Energieerzeuger derjenigen Energieprofilgruppe zugeordnet wird, bei der der Vergleich die größte Ähnlichkeit ergibt.

8. Verfahren nach Anspruch 7,
**dadurch gekennzeichnet, dass**

- der Vergleich anhand der Nächste-Nachbarn-Methode oder der Lernende-Vektorquantisierungs-Methode durchgeführt wird.

9. Verfahren nach einem der vorangehenden Ansprüche,
**dadurch gekennzeichnet, dass**

- die Bereitstellung der Energieprofilgruppen und/oder die Zuordnung von Energieverbrauchern (13a-i, 18) und/oder Energieerzeugern (14a-d) zu Energieprofilgruppen in regelmäßigen Abständen oder ereignisgesteuert wiederholt durchgeführt wird.

10. System zum Betreiben eines elektrischen Energieversorgungsnetzes, das eine Mehrzahl von elektrischen Energieverbrauchern (13a-i) und/oder Energieerzeugern (14a-d) umfasst, mit einer Steuereinrichtung (16), die mit den Energieerzeugern (13a-i) und/oder Energieverbrauchern (14a-d) in verbindbar ist,
**dadurch gekennzeichnet, dass**

- die Steuereinrichtung (16) zur Durchführung eines Verfahrens gemäß einem der Ansprüche 1 bis 9 eingerichtet ist.

**Claims**

1. Method for operating an electrical energy supply network comprising a plurality of electrical energy consumers (13a-i) and/or energy generators (14a-d) connected to a common control device (16),
**characterized in that**
the following steps are carried out in order to operate the energy supply network:

- at least two energy profile groups are provided, the energy consumers (13a-i) and/or energy generators (14a-d) being assigned to said energy profile groups in such a manner that energy consumers (13a-i) having the same or similar energy consumption time series and energy generators (14a-d) having the same or similar energy generation time series are each assigned to the same energy profile group, wherein the energy consumption time series and the energy generation time series represent a temporal profile of the energy consumption and of the energy generation;
- a further energy consumer (18) is assigned to one of the energy profile groups using at least one energy consumption time series characteristic of said consumer and/or a further energy generator is assigned to one of the energy profile groups using at least one energy generation time series characteristic of said generator; and
- all energy generators (14a-d) and/or energy consumers (13a-i, 18) in the same energy profile group are operated by the common control device (16) using a group energy consumption time series or group energy generation time series characteristic of the respective energy profile group.

2. Method according to Claim 1, **characterized in that**

- in order to provide the energy profile groups, known energy consumption time series of the energy consumers (13a-i) of the energy supply network and/or known energy generation time series of the energy generators (14a-d) of the energy supply network are examined for existing similarities; and
- energy consumption time series similar to one another and energy generation time series similar to one another are combined in a common energy profile group.

3. Method according to Claim 2, **characterized in that**

- the energy consumption time series and/or the energy generation time series are provided as multidimensional vectors which represent a measured power obtained or delivered over a predefined consideration time window for a plurality of measurement times;
- the multidimensional vectors are mapped to a dimensionally reduced feature space in order to examine the energy consumption time series or energy generation time series for existing similarities; and
- the energy profile groups are determined inside the dimensionally reduced feature space.

4. Method according to Claim 3, **characterized in that**

- the multidimensional vectors are mapped to the dimensionally reduced feature space using the method of self-organizing maps.

5. Method according to Claim 4, **characterized in that**

- the k-means method or an extended k-means method is carried out in order to determine the energy profile groups in the dimensionally reduced feature space.

6. Method according to Claim 2 or 3, **characterized in that**

- the energy consumption time series and/or energy generation time series are preprocessed using normalization before being examined for existing similarities.

7. Method according to one of the preceding claims, **characterized in that**

- in order to assign the further energy consumer (18) or the further energy generator to one of the energy profile groups, the energy consumption time series of the further energy consumer (18) or the energy generation time series of the further energy generator is compared with the model energy consumption time series characteristic of the respective energy profile group or the model energy generation time series characteristic of the respective energy profile group; and
- the further energy consumer or further energy generator is assigned to that energy profile group for which the comparison reveals the greatest similarity.

8. Method according to Claim 7, **characterized in that**

- the comparison is carried out using the nearest neighbor method or the learning vector quantization method.

9. Method according to one of the preceding claims, **characterized in that**

- the provision of the energy profile groups and/or the assignment of energy consumers (13a-i, 18) and/or energy generators (14a-d) to energy profile groups is/are carried out at regular intervals or repeatedly in an event-controlled manner.

**10.** System for operating an electrical energy supply network comprising a plurality of electrical energy consumers (13a-i) and/or energy generators (14a-d), having a control device (16) which can be connected to the energy generators (13a-i) and/or energy consumers (14a-d),
**characterized in that**

- the control device (16) is set up to carry out a method according to one of Claims 1 to 9.

**Revendications**

**1.** Procédé pour faire fonctionner un réseau d'alimentation en énergie électrique, qui comprend une pluralité d'utilisateurs (13a-i) d'énergie électrique et/ou de producteurs (14a-d) d'énergie, qui sont en liaison avec un dispositif (16) de commande commun,
**caractérisé en ce que**
pour faire fonctionner le réseau d'alimentation en énergie, on effectue les stades suivantes :

- on met à disposition au moins deux groupes de profil d'énergie, auxquels les consommateurs (13a-i) d'énergie et/ou les producteurs (14a-d) d'énergie sont affectés, de manière à affecter respectivement des consommateurs (13a-i) d'énergie, ayant les mêmes séries temporelles de consommation d'énergie ou des séries temporelles de consommation d'énergie semblables, et des producteurs (14a-d) d'énergie, ayant les mêmes séries temporelles de production d'énergie ou des séries temporelles de production d'énergie semblables, au même groupe de profil d'énergie, dans lequel les séries temporelles de consommation d'énergie et les séries temporelles de production d'énergie reproduisent une variation, en fonction du temps, de la consommation d'énergie ou de la production d'énergie ;
- on affecte un autre consommateur (18) d'énergie, à l'aide d'au moins une série temporelle de consommation d'énergie, qui en est caractéristique, et/ou un autre producteur d'énergie, à l'aide d'au moins une série temporelle de production d'énergie, qui en est caractéristique, à l'un des groupes de profil d'énergie et
- on fait fonctionner tous les producteurs (14a-d) d'énergie et/ou tous les consommateurs (13a-i, 18) d'énergie du même groupe de profil d'énergie, à l'aide d'une série temporelle de consommation d'énergie de groupe ou de production d'énergie de groupe caractéristique pour ce groupe de profil d'énergie, par le dispositif (16) de commande commun.

**2.** Procédé suivant la revendication 1,
**caractérisé en ce que**

- pour la mise à disposition des groupes de profil d'énergie, on recherche des similitudes existantes des séries temporelles connues de consommation d'énergie par les consommateurs (13a-i) d'énergie du réseau d'alimentation en énergie et/ou des séries temporelles connues de production d'énergie par les producteurs (14a-d) d'énergie du réseau d'alimentation en énergie et
- on rassemble des séries temporelles de consommation d'énergie semblables ou des séries temporelles de production d'énergie semblables en un groupe de profil d'énergie commun.

**3.** Procédé suivant la revendication 1,
**caractérisé en ce que**

- on met à disposition les séries temporelles de consommation d'énergie et/ou les séries temporelles de production d'énergie sous la forme de vecteurs à plusieurs dimensions, qui représentent, par une fenêtre temporelle de considération donnée à l'avance, pour plusieurs instants de mesure, une puissance mesurée fournie ou cédée ;
- pour rechercher les similitudes existantes des séries temporelles de consommation d'énergie ou des séries temporelles de production d'énergie, on produit une reproduction des vecteurs à plusieurs dimensions dans un espace de caractéristique réduit en dimension et
- on détermine les groupes de profil d'énergie dans l'espace de caractéristique réduit en dimension.

**4.** Procédé suivant la revendication 3,
**caractérisé en ce que**

- on effectue la reproduction des vecteurs à plusieurs dimensions dans l'espace de caractéristique réduit en dimension, au moyen du procédé des cartes autoorganisées.

**5.** Procédé suivant la revendication 4,
**caractérisé en ce que**

- pour déterminer les groupes de profil d'énergie dans l'espace de caractéristique réduit en dimension, on effectue la méthode k-means ou une méthode k-means étendue.

**6.** Procédé suivant la revendication 2 ou 3,
**caractérisé en ce que**

- on norme les séries temporelles de consommation d'énergie et/ou les séries temporelles de production d'énergie avant la recherche de similitudes existantes.

7. Procédé suivant l'une des revendications précédentes,
   **caractérisé en ce que**

   - pour affecter l'autre consommateur (18) d'énergie ou l'autre producteur d'énergie à l'un des groupes de profil d'énergie, on compare les séries temporelles de consommation d'énergie de l'autre consommateur (18) d'énergie ou les séries temporelles de production d'énergie de l'autre producteur d'énergie, à la série temporelle de consommation d'énergie modèle ou à la série temporelle de production d'énergie modèle, caractéristique pour le groupe de profil d'énergie respectif et
   - on affecte l'autre consommateur d'énergie ou l'autre producteur d'énergie au groupe de profil d'énergie pour lequel la comparaison donne la similitude la plus grande.

8. Procédé suivant la revendication 7,
   **caractérisé en ce que**

   - on effectue la comparaison au moyen de la méthode du voisin le plus proche ou de la méthode de quantification vectorielle d'apprentissage.

9. Procédé suivant l'une des revendications précédentes,
   **caractérisé en ce que**

   - on effectue, de manière répétée, à des intervalles réguliers, ou sous la commande d'un évènement, la mise à disposition des groupes de profil d'énergie et/ou l'affectation des consommateurs (13a-i, 18) d'énergie et/ou des producteurs (14a-d) d'énergie à des groupes de profil d'énergie.

10. Système pour faire fonctionner un réseau d'alimentation en énergie électrique, qui comprend une pluralité de consommateurs (13a-i) d'énergie électrique et/ou de producteurs (14a-d) d'énergie électrique, comprenant un dispositif (16) de commande, qui peut être relié aux producteurs (13a-i) d'énergie et/ou aux consommateurs (14ad) d'énergie,
    **caractérisé en ce que**

    - le dispositif (16) de commande est conçu pour effectuer un procédé suivant l'une des revendications 1 à 9.

FIG 1

FIG 2

FIG 3

FIG 4

FIG 5

Normierter
Energieverbrauch

Tageszeit [h]

FIG 6

Normierter
Energieverbrauch

Tageszeit [h]

Normierter
Energieverbrauch

Tageszeit [h]

Normierter
Energieverbrauch

Tageszeit [h]

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2355294 A

**In der Beschreibung aufgeführte Nicht-Patentliteratur**

- Teuvo Kohonen: Self-Organizing Maps. Springer-Verlag, 1997